Europäisches Patentamt

(19) European Patent Office

Office européen des brevets

(11) Publication number: **0 018 465**
**B1**

# (12) EUROPEAN PATENT SPECIFICATION

(45) Date of publication of patent specification: **18.04.84**

(51) Int. Cl.³: **H 02 P 7/62, B 23 B 45/02**

(21) Application number: **80100393.0**

(22) Date of filing: **25.01.80**

(54) **Control device and method of controlling the rotational speed of a portable power tool.**

(30) Priority: **29.01.79 IT 1969779**

(43) Date of publication of application:
**12.11.80 Bulletin 80/23**

(45) Publication of the grant of the patent:
**18.04.84 Bulletin 84/16**

(84) Designated Contracting States:
**BE DE FR GB IT NL**

(56) References cited:
**CH - A - 429 889**
**DE - A - 2 655 574**
**GB - A - 760 207**
**US - A - 3 447 057**
**US - A - 3 564 372**

(73) Proprietor: **Black & Decker Inc.**
**Drummond Plaza Office Park 1423 Kirkwood Highway**
**Newark Delaware 19711 (US)**

(72) Inventor: **Cuneo, Giuseppe**
**via Lorentino 2A**
**IT-24032 Calolziocorte (IT)**

(74) Representative: **Blumbach Weser Bergen Kramer Zwirner Hoffmann Patentanwälte**
**Radeckestrasse 43**
**D-8000 München 60 (DE)**

Courier Press, Leamington Spa, England.

# Control device and method for controlling the rotational speed of a portable power tool

The present invention relates to portable power tools and in particular to a control device for automatically controlling the speed of rotation of the electric motor of a portable power tool as a function of the degree to which the chuck of the tool is opened to accommodate the tool bit. The present invention also relates to a method of controlling the rotational speed of such power tools.

It is well known in the art that the cutting speed of the tool bit of a portable power tool, as for example the drill bit of an electric drill, is a function of both the rotational speed of the motor and the diameter of the tool bit. In particular, it will readily be appreciated that for a fixed motor speed, the cutting speed of a drill bit will increase proportionately with increases in the diameter of the drill bit used. Accordingly, prior art electric drills are known to include motor speed control knobs which can be manually adjusted by an operator to set the speed of the motor to the recommended speed for a given bit diameter as provided on a reference table. With prior art electric drills, therefore, it is incumbent upon the operator to remember to adjust the speed of the motor each time the size of the drill bit is changed. Failure to correctly set the speed of the motor can cause less than optimum operation and a consequent premature wearing of the tool bit.

Accordingly, it is the primary object of the present invention to provide a control device for a portable power tool, such as an electric drill, that will automatically adjust the speed of the motor in accordance with changes in the diameter of the tool bit used.

In addition, it is a further object of the present invention to provide a control device for a portable power tool, such as an electric drill, which also includes means for permitting an operator to initially preset the speed of the motor to an optimum reference speed for a particular type of material so that subsequent motor speed changes caused by changes in bit size are made relative to the preset reference speed.

Fig. 1 is a diagrammatical elevational view partially in section of an electric drill incorporating the speed control device of the present invention; and

Fig. 2 is a circuit diagram of the speed control device of the present invention;

Fig. 3 is a circuit diagram of the speed control device of the present invention incorporating alternative potentiometer circuit;

Fig. 4 is a plan view of a portable electric drill equipped with the speed control device according to the invention;

Fig. 5 is an elevation view of the portable electric drill of Fig. 4.

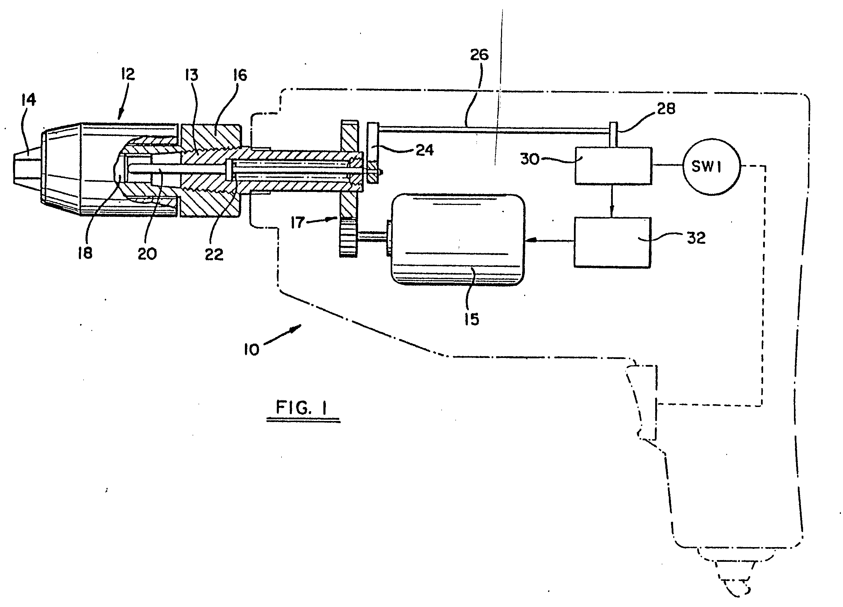

Referring to Fig. 1, an electric drill 10 incorporating the speed control device of the present invention is shown. The electric drill 10 is otherwise conventional in construction and includes a keyless chuck 12 which is rotatably driven through a gear assembly 17 by an electric motor 15. The drill chuck 12 can be of the kind known as a keyless Validus chuck and includes a plurality of jaws 14 which are opened and closed under the control of a ring 16 for securing a drill bit in the chuck. Ring 16 acts upon jaws 14 via a thrust plate 18 which moves fore and aft with adjustments in ring 16 to open and close jaws 14 as is conventional. The position of the thrust plate 18 is therefore indicative of the size of the opening defined by the jaws 14.

In accordance with the present invention, the shaft 13 of chuck 12 has an axial bore formed therein to accommodate a sensor rod 20 whose forward end is maintained in constant contact with thrust plate 18 under the bias of a spring 22. Sensor rod 20 is mechanically coupled via element 24 to a connecting rod 26 which is in turn connected to the wiper arm 28 of a potentiometer circuit 30. The output of the potentiometer circuit 30 is provided to a speed control circuit 32 which controls the amount of current supplied to the motor 15 in accordance with the setting of the potentiometer circuit 30. Thus, it can be seen that as the chuck jaws 14 are opened and closed to accommodate various sized drill bits, the position of the wiper arm 28 of potentiometer circuit 30 is adjusted via the mechanical connection through sensor rod 20, element 24 and connecting rod 26, thereby varying accordingly the speed of the motor 15.

In addition, the preferred embodiment of the present invention includes a multiple-position speed select switch SW1 for manually selecting an optimum speed range for a given type of material.

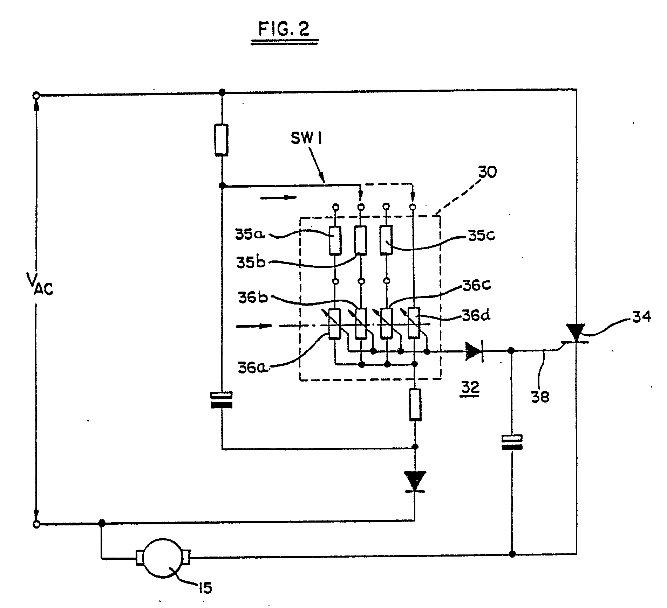

Turning now to Fig. 2, a circuit diagram of the speed control circuit of the present invention is shown. The speed of the motor 15 is controlled by controlling the amount of current supplied to the motor. This is accomplished in a conventional manner by controlling the firing angle of a semiconductor switching device, herein a thyristor 34, which is connected in series with the motor 15. The firing angle of thyristor 34 is controlled by varying the magnitude of the voltage provided on line 38 to the gate of thyristor 34, which is in turn determined by the setting of the potentiometer circuit 30. In the preferred embodiment, the potentiometer circuit 30 comprises four parallel connected variable resistors 36a—36d which have their wiper arms mechanically tied together and their wiper terminals tied in common to line 38. One side of each of the variable resistors 36a—36d is tied in common to one side of the voltage source and the other side of each of the variable resistors 36a—36d is connected through another resistor, 35a—35c respectively, to one of the select terminals of the speed select switch SW1, except for variable resistor 36d which is connected directly to switch SW1 as shown. The movable contact terminal of select switch SW1 is connected to the other side of the voltage source. Thus, it can be seen that the setting of select switch SW1 determines which series connected resistor pair — i.e., resistor 35a and potentiometer 36a, resistor 35b and potentiometer 36b, resistor 35c and potentiometer 36c, or potentiometer 36d — will be switched in circuit to control the voltage signal on line 38. Since the values of resistors 35a—35c are unequal, it will be appreciated that the voltage range of the signal on line 38 can be altered by changing the setting of select switch SW1. In other words, the range over which the speed of the motor will vary pursuant to changes in the position of the chuck jaws is determined by the setting of speed select switch SW1.

Accordingly, in practice an operator will initially set the position of select switch SW1 in accordance with the type of work material. This serves to establish the appropriate optimum speed range for that particular material, given the range of bit sizes which can be accommodated by the drill. Thereafter, as the position of the chuck jaws is changed to accommodate various sized drill bits, the resistance values of the potentiometers 36a—36d will change accordingly as previously described, to thereby automatically adjust the speed of the motor 15 relative to the speed range selected. In the embodiment illustrated, four different speed ranges are provided. However, additional speed selections for accommodating a wider variety of materials can readily be added to the control circuit if desired.

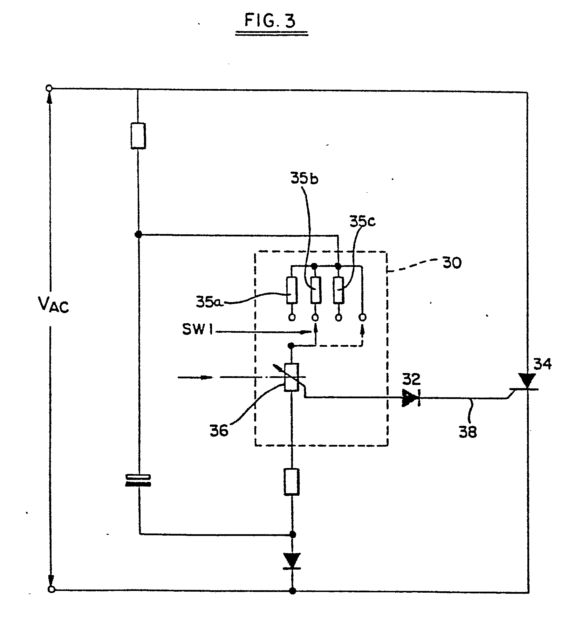

According to another embodiment of the invention, the potentiometer circuit can be configured as shown in Fig. 3 wherein only one potentiometer 36 is required. Thus, when the positions of the chuck jaws are changed, the resistance value of potentiometer 36 will change accordingly.

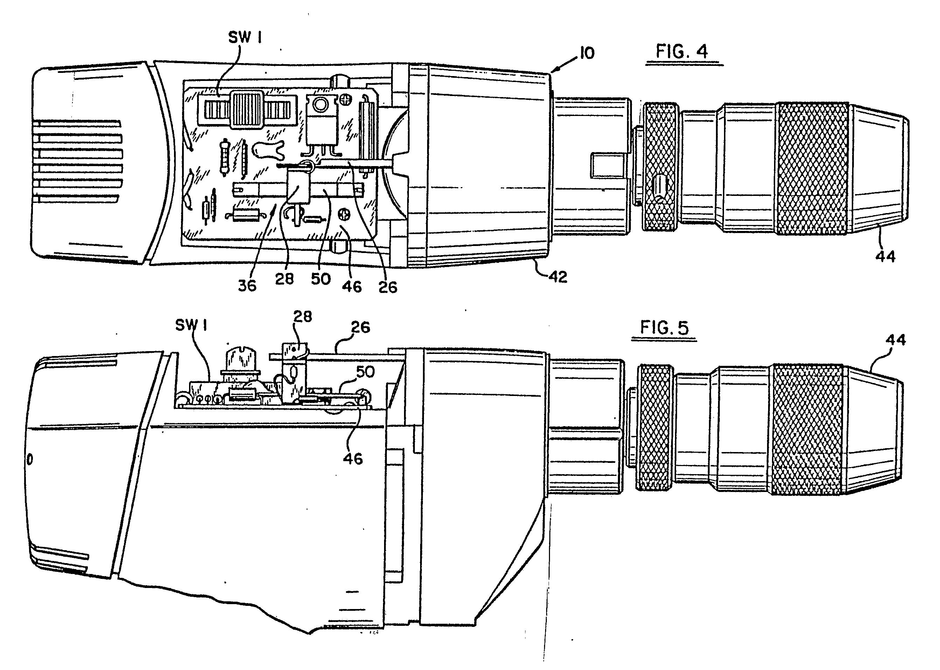

Referring now to Fig. 4, a portable electric drill 10 is equipped with a housing 42 and a keyless chuck 44. The top portion of the housing is cut away to show the speed-control circuit 32 mounted on a printed-circuit board 46. The printed-circuit board 46 is mounted in the upper part of the housing 42 as shown in close proximity of the connecting rod 26 slideably mounted in the housing. The connecting rod 26 is connected to the sensor rod 20 as shown in Fig. 1.

The potentiometer 36 is mounted on the board 46 and includes resistance element 50 and a wiper arm 28 attached to the connecting rod 26. By adjusting the chuck 44 to accommodate a drill bit of a size selected by the operator, the rod 26 is moved in a direction along its longitudinal axis as previously described so that the voltage taken off of the wiper arm is indicative of the drill size.

The switch SW1 of Figs. 2 and 3 is also mounted on board 46 as are other components of the speed-control circuit.

While the above description constitutes the preferred embodiment of the present invention, it will be appreciated that the invention is susceptible to modification, variation and change without departing from the proper scope or fair meaning of the accompanying claims.

## Claims

1. A portable electric tool having an electric motor (15) for rotating an adjustable tool holder (12) capable of receiving and accommodating various diameter tools, characterized by:

sensor means (20) operatively connected to said tool holder (12, 18) for sensing the size of the tool secured in said tool holder; and speed control means (30, 32) operatively connected to said sensor means (20) for controlling the speed of said motor (15) in accordance with the sensed size of said tool.

2. The portable electric tool of Claim 1, characterized in that said speed control means includes potentiometer means (30) connected to said sensor means (20) for producing an output signal that varies in accordance with variations in the sensed size of the tool secured in said tool holder (12).

3. The portable electric tool of Claim 2, characterized in that said speed control means further includes a control circuit (32) connected to said potentiometer means (30) for controlling the current supplied to said motor (15) in accordance with said output signal.

4. The portable electric tool of Claim 3, characterized in that said speed control means (32) further includes switch circuit means (SW1) connected between a source of electrical power and said potentiometer means (30) for controlling the magnitude of the voltage signal supplied to said potentiometer means (32).

5. The portable electric tool of Claim 4, characterized in that said switch means (SW1) includes a manually operable multiple-position select switch.

6. The portable electric tool of Claim 1, characterized in that said tool holder comprises a chuck (12) rotatably mounted to a shaft (13) drivingly coupled to said motor (15), and said sensor means includes a sensor rod (20) slidably disposed within a bore formed in said shaft (13).

7. The portable electric tool of Claim 6, characterized in that said chuck (12) includes a plurality of jaws (14) and an actuating member (18) that is adapted to open and close said jaws (14) for securing in said chuck (12) various size tools, and said sensor means further includes a biasing member (22) for maintaining said sensor rod (20) in operative contact with said actuating member (18).

8. The portable electric tool of Claim 1, characterized in that:

said speed control means comprises potentiometer means (30) connected to said sensor means (20) for producing an output signal whose magnitude varies in accordance with the sensed size of the tool secured in said tool holder (12); and

a select switch (SW1) connected between a source of electrical power and said potentiometer means (30) for controlling the magnitude of the signal supplied to said potentiometer (30).

9. The portable electric tool of Claim 1, characterized in that said speed control means (30, 32) comprises a control member (30) which is adjusted by said sensor means (20) in dependence upon the adjusted condition of the tool holder (12).

10. The portable electric tool of Claim 9, characterized by switch circuit means (SW1) connected between a source of electrical power and said control member (30) for controlling the voltage signal supplied to said control member.

11. The portable electric tool of Claim 1, characterized in that:

said tool holder (12) has a thrust plate (18) movable fore and aft to a position dependent upon the diameter of the tool inserted into the tool holder;

said sensor means (20) comprises a rod-like structure (20, 24, 26) slideably mounted in the portable electric tool (42) and resilient means (22) resiliently biasing one end of said rod-like structure against the thrust plate (18); and

said speed control means (30, 32) comprises a control circuit (32) with a potentiometer (30) connected into said control circuit (32), said potentiometer having a wiper arm (28) connected to the other end of said rod-like structure (20, 24, 26).

12. The portable electric tool of Claim 11, characterized by said control circuit (32) including a printed-circuit board (46) mounted in the portable electric tool in close proximity to said other end of said rod-like structure, said potentiometer (30, 36) being mounted on said printed-circuit board adjacent said other end of said rod-like structure.

13. The portable electric tool of Claim 12, characterized by switch circut means (SW1) connected to said potentiometer (30) for adjusting the speed of the motor to the material to be worked upon by the tool so that respective speed adjustments obtained from said switch circuit means and said potentiometer are superimposed one upon the other.

14. A method of controlling the speed of the motor of the portable electric tool of Claim 1, comprising selecting a tool from a plurality of tools having respectively different diameters, and then inserting the selected tool in the adjustable tool holder, characterized by the step of adjusting the adjustable tool holder to accommodate the selected tool and thereby automatically setting said speed control means to obtain a speed of the motor corresponding to the size of the tool inserted in the tool holder.

15. The method of Claim 14, characterized in that said portable electric tool includes switch circuit means connected to said speed control means for adjusting the speed of the motor to the material to be worked upon by the tool, the method including the further step of setting said switch circuit means to accommodate the material to be worked upon.

**Patentansprüche**

1. Elektrohandwerkzeug mit einem Elektromotor (15) zum Drehen eines einstellbaren Werkzeughalters (12), der zur Aufnahme und Anpassung an Werkzeuge verschiedenen Druchmessers geeignet ist, gekennzeichnet durch:

einen funktionsmäßig mit dem Werkzeughalter (12, 18) verbundenen Meßfühler zum Erfassen der Größe des im Werkzeughalters befestigten Werkzeuges; und

eine funktionsmäßig mit dem Meßfühler (20) verbundene Geschwindigkeitssteuereinrichtung (30, 32) zum Steuern der Geschwindigkeit des Motors (15) in Abhängigkeit von der erfaßten Größe des Werkzeuges.

2. Elektrohandwerkzeug nach Anspruch 1, dadurch gekennzeichnet, daß die Geschwindigkeitssteuereinrichtung eine mit dem Meßfühler (20) verbundene Potentiometereinrichtung (30) enthält zur Erzeugung eines Ausgangssignals, das in Abhängigkeit von Änderungen in der erfaßten Größe des im Werkzeughalter (12) befestigten Werkzeuges variiert.

3. Elektrohandwerkzeug nach Anspruch 2, dadurch gekennzeichnet, daß die Geschwindigkeitssteuereinrichtung außerdem eine mit der Potentiometereinrichtung (30) verbundene Steuerschaltung (32) zum Steuern der Stromzufuhr zu dem Motor (15) in Abhängigkeit von dem Ausgangssignal enthält.

4. Elektrohandwerkzeug nach Anspruch 3, dadurch gekennzeichnet, daß die Geschwindigkeitssteuereinrichtung (32) ferner eine Schalteinrichtung (SW1) enthält, die zwischen eine Stromversorgungsquelle und die Potentiometereinrichtung (30) eingefügt ist, um die Größe des an die Potentiometereinrichtung (32) angelegten Spannungssignals zu steuern.

5. Elektrohandwerkzeug nach Anspruch 4, dadurch gekennzeichnet, daß die Schalteinrichtung (SW1) einen manuell betätigbaren Wahlschalter mit einer Vielzahl von Positionen enthält.

6. Elektrohandwerkzeug nach Anspruch 1, dadurch gekennzeichnet, daß der Werkzeughalter ein Spannfutter (12) enthält, des drehbar auf einer mit dem Antrieb des Motors (15) gekoppelten Welle (13) befestigt ist, und daß der Meßfühler einen innerhalb einer in der Welle (13) gebildeten Bohrung gleitbar angeordneten Fühlstift (20) enthält.

7. Elektrohandwerkzeug nach Anspruch 6, dadurch gekennzeichnet, daß das Spannfutter (12) eine Vielzahl von Backen (14) und ein Betätigungsglied (18) enthält, durch das die Backen (14) zum Befestigten verschieden großer Werkzeuge im Spannfutter (12) geöffnet und geschlossen werden können, und daß der Meßfühler ferner ein Vorspannglied (22) enthält, um den Fühlstift (20) in Kontakt mit dem Betätigungsglied (18) zu halten.

8. Elektrohandwerkzeug nach Anspruch 1, dadurch gekennzeichnet, daß die Geschwindigkeitssteuereinrichtung eine mit dem Meßfühler (20) verbundene Potentiometereinrichtung (30) enthält zur Erzeugung eines Ausgangssignals, dessen Größe abhängig von der erfaßten Größe des im Werkzeughalter (12) befestigten Werkzeuges variiert; und ein Wahlschalter (SW1) zwischen eine Stromversorgungsquelle und die Potentiometereinrichtung (30) eingefügt ist, um die Größe des dem Potentiometer (30) zugeführten Signals zu steuern.

9. Elektrohandwerkzeug nach Anspruch 1, dadurch gekennzeichnet, daß die Geschwindigkeitssteuereinrichtung (30, 32) ein Steuerglied (30) enthält, das durch den Meßfühler (20) in Abhängigkeit vom Einstellzustand des Werkzeughalters (12) eingestellt wird.

10. Elektrohandwerkzeug nach Anspruch 9, gekennzeichnet, durch eine Schalteinrichtung (SW1), die zwischen eine Stromversorgungsquelle und das Steuerglied (30) eingefügt ist, um das dem Steuerglied zugeführte Spannungssignal zu steuern.

11. Elektrohandwerkzeug nach Anspruch 1, dadurch gekennzeichnet, daß

der Werkzeughalter (12) eine Druckplatte (18) enthält, die vor und zurück in eine von Durchmesser des in dem Werkzeughalter eingesetzten Werkzeuges abhängige Position bewegbar ist;
der Meßfühler (20) ein stiftförmiges Teil (20, 24, 26) enthält, das gleitbar im Elektrohandwerkzeug (42) gelagert ist, sowie eine Federeinrichtung (22), die ein Ende des stiftförmigen Teils federnd gegen die Druckplatte (18) drückt; und
die Geschwindigkeitssteuereinrichtung (30, 32) eine Steuerschaltung (32) mit einem Potentiometer (30) enthält, das in die Steuerschaltung (32) eingeschaltet ist, und das Potentiometer einen Schleifarm (28) besitzt, der mit dem anderen Ende des stiftförmigen Teils (20, 24, 26) in Verbindung steht.

12. Elektrohandwerkzeug nach Anspruch 11, dadurch gekennzeichnet, daß die Steuerschaltung (32) eine Platte (46) mit gedruckter Shaltung enthält, die im Elektrohandwerkzeug in enger Nachbarschaft zu dem anderen Ende des stiftförmigen Teils befestigt ist, und daß das Potentiometer (30, 36) auf der Platte benachbart zu diesem Ende des stiftförmigen Teils befestigt ist.

13. Elektrohandwerkzeug nach Anspruch 12, gekennzeichnet durch eine mit dem Potentiometer (30) verbundene Schalteinrichtung (SW1) zum Einstellen der Geschwindigkeit des Motors auf das durch das Werkzeug zu bearbeitende Material, so daß entsprechende Geschwindigkeitseinstellungen aus der Schalteinrichtung und dem Potentiometer einander überlagert werden.

14. Verfahren zum Steuern der Geschwindigkeit des Motors des Elektrohandwerkzeuges nach Anspruch 1, bei dem aus einer Vielzahl von Werkzeugen mit entsprechend verschiedenen Durchmessern ein Werkzeug ausgewählt und dann in den einstellbaren Werkzeughalter eingesetzt wird, gekennzeichnet durch den Verfahrensschritt, daß der einstellbare Werkzeughalter in Anpassung an das ausgewählte Werkzeug eingestellt wird und hierbei automatisch die Geschwindigkeitssteuereinrichtung so eingestellt wird, daß eine der Größe des in den Werkzeughalter eingesetzten Werkzeuges entsprechende Motorgeschwindigkeit erhalten wird.

15. Verfahren nach Anspruch 14, dadurch gekennzeichnet, daß das Elektrohandwerkzeug eine mit der Geschwindigkeitssteuereinrichtung verbundene Schalteinrichtung zum Einstellen der Geschwindigkeit des Motors auf das durch das Werkzeug zu bearbeitende Material enthält, und das Verfahren den weiteren Schritt umfaßt, daß die Schalteinrichtung so eingestellt wird, daß sie dem zu bearbeitenden Material angepaßt ist.

## Revendications

1. Outil électrique portatif comportant un moteur électrique (15) pour entraîner en rotation un porte-outil réglable (12) capable de recevoir et de s'adapter à des outils de différents diamètres, caractérisé en ce qu'il comprend un moyen détecteur (20) accouplé fonctionnellement audit porete-outil (12, 18) de façon à détector la dimension de l'outil fixé dans ledit porte-outil; et un moyen de commande de vitesse (30, 32) accouplé fonctionnellement audit moyen détecteur (20) pour commander la vitesse dudit moteur (15) en concordance avec la dimension détectée dudit outil.

2. Outil électrique portatif selon la revendication 1, caractérisé en ce que ledit moyen de commande de vitesse comprend un potentiomètre (30) relié audit moyen détecteur (20) pour produire un signal de sortie qui varie en relation avec des variations de la dimension détectée de l'outil fixé dans ledit porte-outil (12).

3. Outil électrique portatif selon la revendication 2, caractérisé en ce que ledit moyen de commande de vitesse comprend en outre un circuit de commande (32) relié audit potentiomètre (30) pour commander le courant fourni audit moteur (15) en concordance avec ledit signal de sortie.

4. Outil électrique portatif selon la revendication 3, caractérisé en ce que ledit moyen de commande de vitesse (32) comprend en outre un circuit de commutation (SW1) branché entre une source de courant électrique et ledit potentiomètre (30) pour commander la grandeur du signal de tension fourni audit potentiomètre (30).

5. Outil électrique portatif selon la revendication 4, caractérisé en ce que ledit moyen de commutation (SW1) comprend un commutateur sélecteur à positions multiples manoeuvrable manuellement.

6. Outil électrique portatif selon la revendication 1, caractérisé en ce que ledit porte-outil comprend un mandrin (12) monté à rotation sur un arbre (13) relié au moteur (15) de façon à être entraîné et en ce que ledit moyen détecteur comprend une tige de détection (20) montée de façon coulissante dans un trou ménagé dans ledit arbre (13).

7. Outil électrique portatif selon la revendication 6, caractérisé en ce que ledit mandrin (12) comprend plusieurs mâchoires (14) et un élément d'actionnement (18) qui est agencé pour ouvrir et fermer lesdites mâchoires (14) afin de fixer dans ledit mandrin (12) des outils de différentes dimensions et en ce que ledit moyen détecteur comprend en outre un élément de poussée (22) pour maintenir ladite tige de détection (20) en contact fonctionnel avec ledit élément d'actionnement (18).

8. Outil électrique portatif selon la revendication 1, caractérisé en ce que ledit moyen de commande de vitesse comprend un potentiomètre (30) relié audit moyen détecteur (20) pour produire un signal de sortie dont la grandeur varie en concordance avec la dimension détectée de l'outil fixé dans ledit porte-outil (12), ainsi qu'un commutateur sélecteur (SW1) branché entre une source de courant électrique et ledit potentiomètre (30) pour commander la grandeur du signal fourni audit potentiomètre (30).

9. Outil électrique portatif selon la revendication 1, caractérisé en ce que ledit moyen de commande de vitesse (30, 32) comprend un élément de commande (30) qui est relié par ledit moyen détecteur (20) en fonction de la condition réglée du porte-outil (12).

10. Outil électrique portatif selon la revendication 9, caractérisé en ce qu'il est prévu les moyens de commutation (SW1) branchés entre une source de courant électrique et ledit élément de commande (30) pour commander le signal de tension fourni audit élément de commande.

11. Outil électrique portatif selon la revendication 1, caractérisé en ce que ledit porte-outil (12) comporte une plaque de poussée (18) deplaçable vers l'avant et vers l'arrière jusque dans une position dépendant du diamètre de l'outil introduit dans le porte-outil, en ce que ledit moyen détecteur (20) comprend une structure en forme de tige (20, 24, 26) montée de façon coulissante dans l'outil électrique portatif (42) et un moyen élastique (22) poussant élastiquement une extrémité de ladite structure en forme de tige contre la plaque de poussée (18), et en ce que ledit moyen de commande de vitesse (30, 32) comprend un circuit de commande (32) pourvu d'un potentiomètre (30) branché dans ledit circuit de commande (32), ledit potentiomètre comportant un curseur (28) qui est relié à l'autre extrémité de ladite structure en forme de tige (20, 24, 26).

12. Outil électrique portatif selon la revendication 11, caractérisé en ce que ledit circuit de commande (32) comprend une plaquette à circuit imprimé (46) montée dans ledit outil électrique portatif à proximité étroite de ladite autre extrémité de ladite structure en forme de tige, ledit potentiomètre (30, 36) étant monté sur ladite plaquette à circuit imprimé dans une position adjacente à ladite autre extrémité de ladite structure en forme de tige.

13. Outil électrique portatif selon la revendication 12, caractérisé en ce que lesdits moyens de commutation (SW1) sont reliés audit potentiomètre (30) de manière à régler la vitesse du moteur en fonction de la matière à travailler à l'aide de l'outil de façon que des réglages respectifs de vitesse obtenus à partir desdits moyens de commutation et dudit potentiomètre soient mutuellement combinés.

14. Procédé de commande de la vitesse du moteur de l'outil électrique portatif selon la revendication 1, consistant à choisir un outil parmi plusieurs outils ayant des diamètres respectifs différents puis à insérer l'outil sélectionné dans le porte-outil réglable, caractérisé par l'étape consistant à ajuster le porte-outil réglable en vue de recevoir l'outil sélectionné et à régler ainsi automatiquement ledit moyen de commande de vitesse pour établir une vitesse du moteur correspondant à la dimension de l'outil inséré dans le porte-outil.

15. Procédé selon la revendication 14, caractérisé en ce que ledit outil électrique portatif comprend des moyens de commutation reliés audit moyen de commande de vitesse pour ajuster la vitesse du moteur en fonction de la matière à travailler par l'outil, le procédé comprenant l'autre étape consistant à régler lesdits moyens de commutation en adaptation à la matière à travailler.

FIG. 1

FIG. 2

FIG. 3

FIG. 4

FIG. 5